# EUROPEAN PATENT SPECIFICATION

(11) **EP 0 715 777 B1**
(45) Date of publication and mention of the grant of the patent: **18.11.1998**
(21) Application number: 94926536.7
(22) Date of filing: 22.08.1994
(51) Int. Cl.: H02H 9/02, B60R 16/02

(54) **USE OF PTC DEVICES IN WIRING HARNESSES**
VERWENDUNG VON KALTLEITERANORDNUNGEN IN KABELBÄUMEN
UTILISATION DE DISPOSITIFS PTC DANS DES FAISCEAUX DE CABLES

(30) Priority: 23.08.1993 US 110593
(43) Date of publication of application: 12.06.1996
(73) Proprietor: RAYCHEM CORPORATION, Menlo Park, CA 94025-1164 (US)
(72) Inventor: WALSH, Malcolm, R., Redwood City, CA 94061 (US)
(74) Representative: Jones, David Colin
(86) International application number: PCT/US94/09392
(87) International publication number: WO 95/06352

(56) References cited:
- DE-A- 4 015 816
- PATENT ABSTRACTS OF JAPAN vol. 13, no. 465 (M-882) 20 October 1989 & JP,A,01 182 143 (YAZAKI) 20 July 1989

## Description

This invention relates to the use of positive temperature coefficient (PTC) circuit protection devices in electrical wiring harnesses, especially in automobiles (this term being used to include all road vehicles). PTC devices have a low resistance under normal operating conditions but are "tripped" (converted into a high resistance state) by fault conditions such as excessive current or temperature, and thus reduce the current so that the components of the circuit are not damaged.

Conventional electrical systems in automobiles contain a multiplicity of insulated wires which are preassembled as one or more harnesses. The insulation on the wires is usually polyvinyl chloride (PVC) or crosslinked polyethylene, but more expensive insulation materials, e.g. polyesters and fluoropolymers, are sometimes used. The harness is connected to the positive pole of a battery (usually a nominal 12 or 24 volts, e.g. an actual 12-14.7 or 24-29 volts) and, via switches, to operative devices such as lights, window lift motors, etc. The return connection to the battery is made through structural parts of the automobile and/or a separate conductor. The system includes protective devices, usually fuses, which prevent the insulated wires from overheating (thus causing the insulation to melt) if there is a short circuit. The system may also include PTC devices which are placed in or near operative devices to protect them from damage caused by overheating or excessively prolonged use. Such PTC devices (which are referred to herein as APTC devices) do not provide protection to the insulated wires leading to the operative devices.

It has long been well known that PTC devices can be used to replace fuses, and that one of the advantages of using PTC devices is that they can be placed in any convenient location (unlike fuses, which must be accessible even after installation). Thus, it has been proposed in DE 40 15 816 C2 to replace some or all of the fuses in an automobile harness by PTC devices, with the consequent improvement that the physical layout of the harness can be changed to use smaller quantities of insulated wire and other connection components. PTC devices which are used to protect the insulated wires of a harness are referred to herein as branch PTC, or BPTC, devices.

We have discovered, in accordance with the present invention, that further important improvements can be obtained by selecting BPTC devices and insulated wires which are matched to each other and to the operative devices. We have realized that,
because BPTC devices react more slowly than fuses to increases in current (and are, therefore, less affected by the high transient inrush currents which are associated with many operative devices), a fuse can be replaced by a BPTC device of a lower current rating, and that this in turn means that current-carrying capacity of the protected components can also be reduced; this can result in a substantial reduction in the cost and weight of the harness. For example, conventional automobile harnesses use insulated wires of at least 18 AWG (cross-sectional area 0.823 mm²) and other components of similar current-carrying capacity, and the present invention makes it possible to use 20 AWG or 22 AWG wires (cross-sectional area 0.519 or 0.324 mm²) and/or other components, e.g. switches, of similar current-carrying capacity, in many parts of the harness.

In a batch of PTC devices made by the same manufacturing process, uncontrollable variations in the process can cause substantial variation in the conditions which will trip any individual device. The largest steady state current which will not cause any of the devices in the batch to trip is referred to herein as I_{PASS}. I_{PASS} must be high enough to ensure that the system is not subject to an unacceptable level of "nuisance tripping", i.e. tripping by transient or steady state currents which do not cause damage. The smallest steady state current which will cause all of the devices in the batch to trip is referred to as I_{TRIP}. In general, the difference between I_{PASS} and I_{TRIP} decreases slowly as the ambient temperature increases. Depending on the particular type of device, I_{TRIP}, may, for example, be 1.5 to 2.5 times I_{PASS} at 20°C. For any individual device, I_{PASS} and I_{TRIP} are the same. However, in this specification, reference is made to a PTC device having an I_{PASS} and a different I_{TRIP}, because as a practical matter, the manufacturer of a wiring harness must make use of PTC devices taken from a batch of such devices. Generally, the higher the ambient temperature, the lower the pass current and the trip current.

The current-carrying capacity of insulated wires (and other electrical components) depends not only on the size of the current, but also on the duration of the current and the ambient temperature. It also depends upon the extent of the change in the insulation which is regarded as tolerable. For example, softening of the insulation might be regarded as intolerable, i.e. as "damage", for an insulated wire wrapped around a corner, but tolerable for the same wire passing through a straight duct. Users of insulated wires, e.g. manufacturers of automobile wiring harnesses, may for example stipulate that the temperature of the wire must not exceed a particular temperature, and this stipulation can be used to determine the maximum steady state current which the wire is permitted to carry at any particular ambient temperature, without damage to the insulation. In this specification. the term I_{DAMAGE} is used to denote the smallest steady-state current which will cause "damage" to the insulated wire (or other electrical component), with damage being defined by criteria set by the manufacturer and/or user of the harness. For example, damage might be defined as softening of the insulation, fuming of the insulation, or the wire exceeding a certain temperature. For an insulated wire, the way in which I_{DAMAGE} changes with ambient temperature depends mainly on the insulation material, while I_{DAMAGE} at any particular temperature depends also on the size of the wire. The term I₂₂ is used herein to denote the I_{DAMAGE} of a 22 AWG copper wire (cross sectional area 0.324 mm²) which is insulated with polyvinyl chloride.

The maximum current which can be drawn by the operative device(s) which are connected to the power source through a particular BPTC device is referred to herein as I_{LOAD}.

The BPTC device must be such that, throughout the temperature range of interest, e.g. 0° to 80°C, or -40° to +85°C, in automobiles, I_{PASS} is greater than I_{LOAD}. and I_{TRIP} is less than I_{DAMAGE}. However, so far as possible, bearing in mind manufacturing procedures and tolerances, safety margins, and the need to accommodate transient currents higher than the maximum steady state load current, it is preferred that the margin between the I_{PASS} and I_{LOAD} should be small, and that the margin between I_{TRIP} and I_{DAMAGE} should also be small. In this way, the system can make use of lighter and/or less costly components.

I_{LOAD} may decrease to some extent with increasing ambient temperature, but the extent of any such decrease is generally much less than the decrease in I_{PASS}. I_{PASS} is, therefore, usually determined by I_{LOAD} at the top end of the applicable ambient temperature range. With most PTC materials, the decrease in I_{TRIP} with increasing ambient temperature is substantially greater than the decrease in I_{DAMAGE}. I_{DAMAGE} is, therefore, usually determined by I_{TRIP} at the bottom end of the applicable ambient temperature range. The ideal is (for any particular insulated wire) to use a BPTC device whose trip current derating curve is a little below the wire damage curve throughout the ambient temperature range of interest.

This invention provides an electrical harness which is installed in, or which is suitab for installation in, an automobile, an airplane, or a ship, and which comprises
(1) supply connection means which, when the harness is installed, is electrically connected to a first pole of a power source, and which has, at its weakest current-carrying point, a current-carrying capacity of I_{LINK}, and
(2) a plurality of FTC-protected branch circuits which are electrically connected to the supply means in parallel with each other, and each of which comprises
   (a) a branch PTC circuit protection device (BPTC device) which is electrically connected to the supply connection means, and
   (b) at least one elongate PTC-protected branch connection means which (i) has a first end which is connected to the BPTC device and a second end which, when the harness is installed, is connected to at least one operative device, and (ii) has, at its weakest current-carrying point, a current-carrying capacity of I_{DAMAGE}, I_{DAMAGE} being less than I_{LINK} at all temperature between 0° and 80°C;
the BPTC device having, (i) a pass current (I_{PASS}) which is greater than the total steady state current (I_{LOAD}) which can be drawn by all the operative devices which, when the harness is installed, are electrically connected to the power supply through the BPTC device, and (ii) a trip current (I_{TRIP}) which, at all temperatures between 0° and 80°C, is less than I_{DAMAGE};
whereby, if one of the FTC-protected branch connection means is accidentally connected to the first and second poles of the power source by connections which do not include one of the operative devices, there is created a fault circuit which contains the BPTC circuit protection device;
wherein at least one of the following alternative conditions is fulfilled:
(A) in at least one of the PTC-protected branch circuits, IpAss is at least 1.1 times I_{LOAD} at all temperatures between 0° and 80°C, and at at least one temperature between -40°C and 85°C, I_{PASS} is at most 1.3 times I_{LOAD};
(B) in at least one of the PTC-protected branch circuits, I_{DAMAGE} is at least 1.1 times I_{TRIP} at all temperatures between 0° and 80°C, and I_{DAMAGE} is at most 1.5 times I_{TRIP} at at least one temperature between -40° and 85°C;
(C) the total number of FTC-protected branch circuits is ***p***, and at all temperatures between 0° and 80°C, in ***q*** of the FTC-protected branch circuits, where ***q*** is at least 0.1***p***, I_{DAMAGE} is equal to or lower than I₂₂, where I₂₂ is the I_{DAMAGE} of PVC-insulated copper wire having a cross-sectional area of 0.324 mm² (22 AWG); or
(D) some of the PTC-protected branch connection means are insulated copper wires having an I_{DAMAGE} equal to or less than I₂₂, and some of the PTC-protected branch connection means are insulated copper wires having an I_{DAMAGE} greater than I₂₂, where I₂₂ is the I_{DAMAGE} of a PVC-insulated copper wire having a cross-sectional area of 0.324 mm² (22 AWG), and at all temperatures between 0° and 80°C, the total length of the PTC-protected branch connection means having an I_{DAMAGE} greater than I₂₂ is not more than *x* times the total length of the PTC-protected branch connection means in which I_{DAMAGE} is equal to or less than I₂₂, where x is 10.

In condition (A) above, I_{PASS} is at least 1.1 times I_{LOAD}, preferably at least 1.2 times I_{LOAD}, at all temperatures between 0° and 80°C, preferably at all temperatures between -40°C and 85°C; and at at least one temperature between -40°C and 85°C, preferably at at least one temperature between 0° and 80°C, IpAss is at most 1.3 times I_{LOAD}, preferably at most 1.1 times I_{LOAD}. In condition (B), I_{DAMAGE} is at least 1.1 times I_{TRIP}, preferably at least 1.2 times I_{TRIP}, at all temperatures between 0° and 80°C, preferably at all temperatures between -40° and 85°C; and I_{DAMAGE} is at most 1.5 times I_{TRIP}, preferably at most 1.3 times at at least one temperature between -40° and 85°C, preferably at at least one temperature between 0° and 80°C. In condition (C), at all temperatures between 0° and 80°C, preferably at all temperatures between -40° and 85°C, ***q*** is at least 0.1***p***, preferably at least 0.2***p***, particularly at least 0.3***p***, especially at least 0.5***p***. In condition (D) above, at all temperatures between 0° and 80°C, preferably at all temperatures between -40° and 85°C, ***x*** is 10, preferably 5, particularly 2.

A harness as defined above which is installed in an automobile, airplane or ship, can have the supply connection means connected to the positive pole of a DC power source comprising a battery, and each of the PTC-protected branch circuits connected between the supply connection means and a return connection means which is connected to the other pole of the power source. The return connection means can be a part of the harness or a separate member, e.g. the chassis and/or bodywork of the automobile, airplane or ship.

The harnesses of this invention contain a plurality of branch circuits which are PTC-protected branch circuits as defined. The other branch circuits (if any) will normally be protected by other means, e.g. a fuse, a circuit breaker, or a PTC device which does not meet the definition given. Provision must be made for disconnecting the BPTC devices from the power supply. This is preferably done by means of a switch which can be operated to disconnect at least one of the PTC-protected branch circuits. The term switch is used herein in a broad sense to denote any electrical device which achieves connection and disconnection or which otherwise makes it possible to return the BPTC device to the untripped state after the fault has been removed, including make-and-break switches, relays, field effect transistors (FETs), including MOSFETS, JFETS, LEFTS, and PFETS, bipolar devices including Darlingtons, pnp transistors and npn transistors, and silicon-controlled rectifiers (SCR's). The BPTC device can reduce the maximum current to which the switch can be exposed, and thus make it possible to use a cheaper and/or smaller switch.

The harnesses of the invention will generally contain at least one power distribution node which comprises a power input line and a plurality of outgoing lines, each of which is electrically connected to the input line through a BPTC device. The BPTC devices are preferably mounted on, e.g. soldered or welded to, a circuit board, flexible printed circuit or metal frett. The BPTC devices and the connections between them and the input line and the outgoing lines can be contained within a container comprising vents and/or thermal insulation (inside and/or outside the container) which affect the time which the BPTC device(s) take to trip. The BPTC devices can be offset to reduce the extent to which heat is transferred between them. For example if the BPTC devices are planar, they can be mounted parallel to each other and positioned, if space permits, so that adjacent devices overlap, when viewed at right angles to the plane of the devices, by at most 75%, preferably at most 50%, of the area of the smaller device (if their areas are different), for example so that they do not overlap at all.

The PTC-protected branch circuits can be connected to the supply connection directly or through one of a plurality of subsidiary supply means which are electrically connected to the principal supply means in parallel with each other. These subsidiary supply means make it possible to avoid a multiplicity of wires which have to be routed over relatively long distances, especially when the operative devices are controlled by relays which respond to signals generated at a different location. Often at least one of said subsidiary supply means
(i) contains a subsidiary circuit protection device which is the weakest current-carrying point in the subsidiary supply means and which is convened into a high resistance state if the current in the subsidiary supply means exceeds a value I_{SUB} amps and thus reduces the current to a value substantially below I_{SUB}, and
(ii) is connected to a plurality of PTC-protected branch circuits, in each of which I_{PTC} is less than I_{SUB}.

The operative devices in the PTC-protected branch circuits are preferably protected against damage by an APTC device which is connected in series with the operative device and is adjacent to (or forms a part of) that operative device.

The harnesses of the invention can also include diagnostic means which will indicate when a BPTC device is in a tripped condition and/or if it has been in a tripped condition but has been restored to a normal operating condition.

The BPTC devices preferably comprise a PTC element which is composed of a conductive polymer (i.e. a composition which comprises a polymeric component and, dispersed in the polymeric component, a particulate conductive filler, preferably carbon black), and have a resistance of less than 3 ohm, preferably less than 1 ohm, especially less than 0.25 ohm, at 23°C. Preferably they comprise two laminar electrodes, generally metal foil electrodes, with a laminar PTC element sandwiched between the electrodes. For further details of suitable BPTC devices, reference should be made to U.S. Patent Nos. 4,237,441, 4,238,812, 4,315,237, 4,329,726, 4,426,663, 4,685,025, 4,689,475, 4,774,024, 4,800,253, 4,935,166, 5,089,801 and 5,178,797.

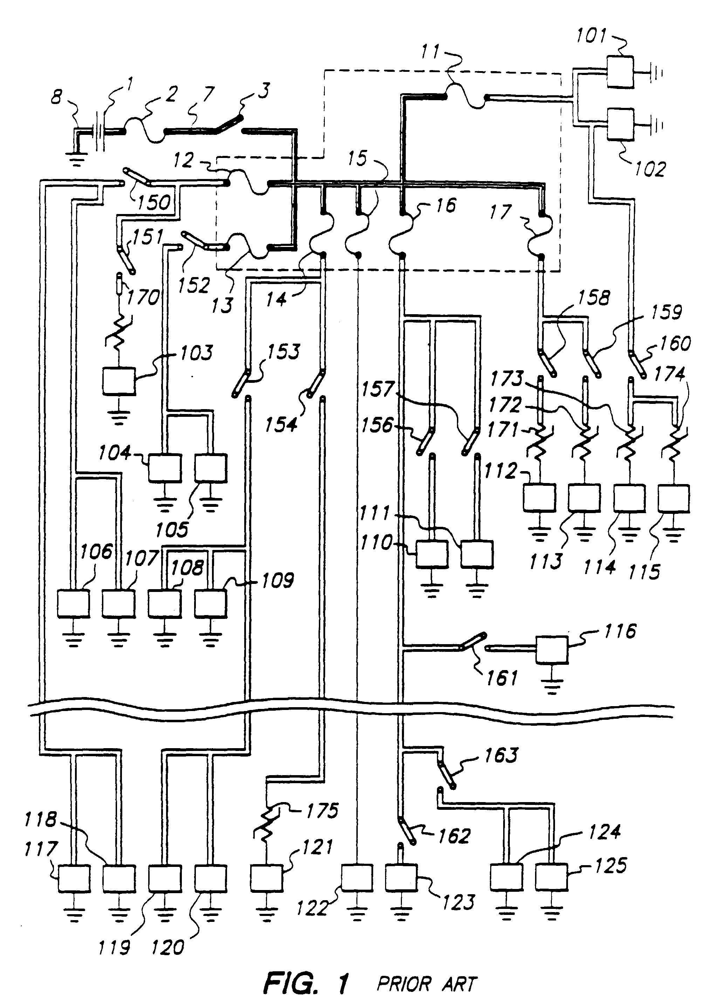

Referring now to the drawings, Figure 1 is a conceptual circuit diagram of an automobile electrical system of known type. A battery 1 is placed at the front of the car and is connected by return connection means 8 to the bodywork of the car, and by supply connection means 7 to the remainder of the circuit. Fuse link 2 and ignition switch 3 form part of the connection means 7. The supply connection means 7 is connected to the rest of the circuit through fuses 11, 12, 13, 14, 15, 16 and 17, all of which are placed within a readily accessible fuse box indicated by the dashed lines in the Figure. Fuse 11 protects the wiring which leads to operative devices 101, 102 which are always on when the ignition switch 3 is on (e.g. sensors); it also protects the wiring which lead to operative devices 114 and 115 (e.g. electric motors) which are controlled by switch 160 and which are protected from by excessive currents by appointed FTC devices ("APTC devices") 173 and 174. Fuse 12 protects wiring which leads to operative devices 106 and 107 at the front of the automobile and 117 and 118 at the rear of the automobile (e.g. parking lights) which are controlled by switch 150. Fuse 12 also protects wiring which leads to operative device 103 (e.g. a horn) which is controlled by switch 151 and protected by APTC device 170. Fuse 13 protects wiring which leads to operative devices 104 and 105 (e.g. headlights) which are controlled by switch 152. Fuse 14 protects wiring which leads to operative devices 108 and 109 at the front of the automobile and operative devices 119 and 120 at the rear of the car (e.g. flashing emergency lights), all of which are controlled by switch 153. Fuse 14 also protects wiring which leads to operative device 121 (e.g. a rear window heater) which is controlled by switch 154 and protected by APTC device 175. Fuse 15 protects the wiring which leads to operative device 122 (e.g. a rear window wiper) at the rear of the automobile. Fuse 16 protects the wiring which leads to operative devices 123, 124 and 125 in the rear of the automobile, device 123 (e.g. a trunk light) being controlled by switch 162 and devices 124 and 125 (e.g. rear courtesy lights) being controlled by switch 163. Fuse 16 also protects the wiring which leads to operative device 110 and 111 (e.g. seat motors) which are controlled by switches 156 and 157 respectively. Fuse 16 also protects the wiring which leads to operative device 116 (e.g. front courtesy lights) which is controlled by switch 161. Fuse 17 protects the wiring which leads to operative devices 112 and 113 (e.g. window lift motors) which are controlled by switches 158 and 159 respectively and protected by APTC devices 171 and 172 respectively.

The gauge (i.e. cross-sectional area) of the wires in Figure 1 is indicated by the number of parallel lines used to depict the wires. Thus the supply connection means has the largest size; the wiring to the operative device 122 has the smallest size; and all the other wiring has an intermediate size. The wiring to the operative device 122 can be of the smallest convenient size for the current requirements of the operative device 122, because it is the only wiring protected by the fuse 15, which has a current-carrying capacity corresponding to that device alone. The wiring and fuses leading to the other operative devices must be of larger size because they are determined by the sum of the requirements of the operative devices which they serve.

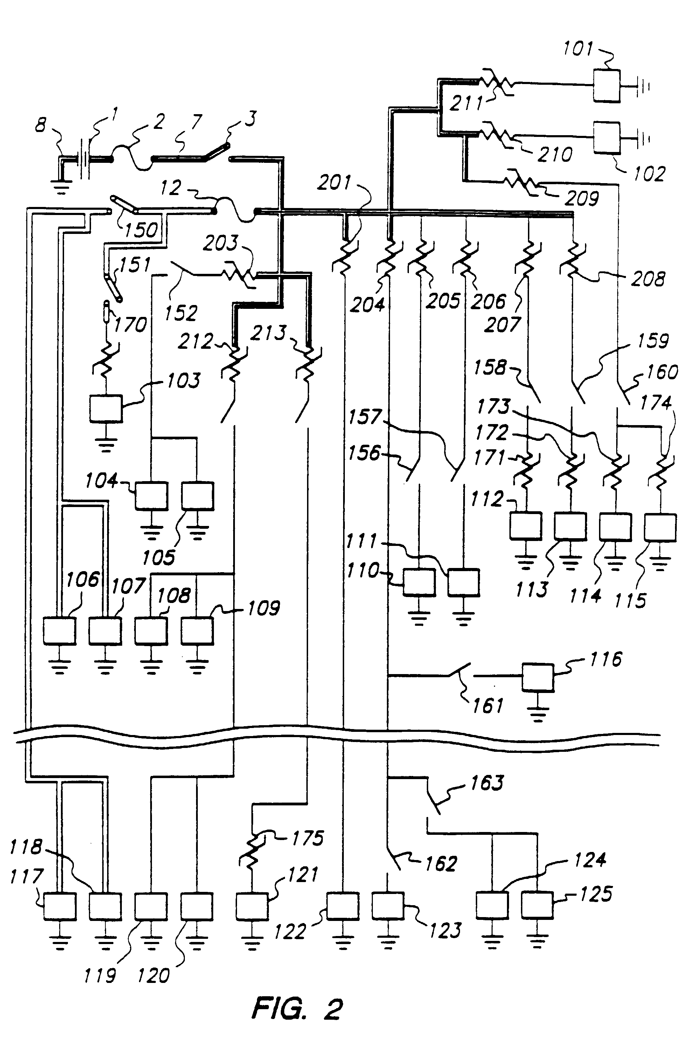

Figure 2 is a conceptual circuit diagram of an electrical system according to the invention which corresponds to the known system of Figure 1, but in which many of the fuses have been replaced by branch PTC devices ("BPTC devices"), and in many cases the wiring has been replaced by lower gauge wire. Fuse 11 has been replaced by three BPTC devices, BPTC device 209 protecting the wiring to operative devices 114 and 115, BPTC device 210 protecting the wiring to operative device 102, and BPTC device 211 protecting the wiring to operative device 101. Fuse 12 is unchanged. Fuse 13 has been replaced by BPTC device 203 having a pass current lower than the current which would blow fuse 13, because the BPTC device responds slowly to the transient currents generated when the headlights 104, 105 are first switched on. Fuse 14 has been replaced by two BPTC devices, BPTC device 212 protecting the wiring to operative devices 119 and 120 and BPTC device 213 protecting the wiring to operative device 121. Fuse 15 has been replaced by a single BPTC device 201. Fuse 16 has been replaced by four BPTC devices, BPTC device 204 protecting the wiring to operative devices 116, 123, 124 and 125, BPTC device 205 protecting the wiring to operative device 110, BPTC device 206 protecting the wiring to operative device 111, and BPTC device 207 protecting the wiring to operative device 112. Fuse 17 has been replace by BPTC device 208 protecting the wiring to operative device 113.

As in Figure 1, the size of the wires is indicated by the number of parallel lines used to depict the wire. In accordance with the invention, the wire size can be reduced by using a BPTC device which has an I_{TRIP} which is lower than the rating of the fuse which it replaces on a one-to-one basis. In addition, when a fuse has been replaced by a number of BPTC devices, the I_{PASS} of the BPTC device and the size of the wiring protected by the BPTC devices can be reduced because the number of operative devices served by each branch of the wiring has been reduced.

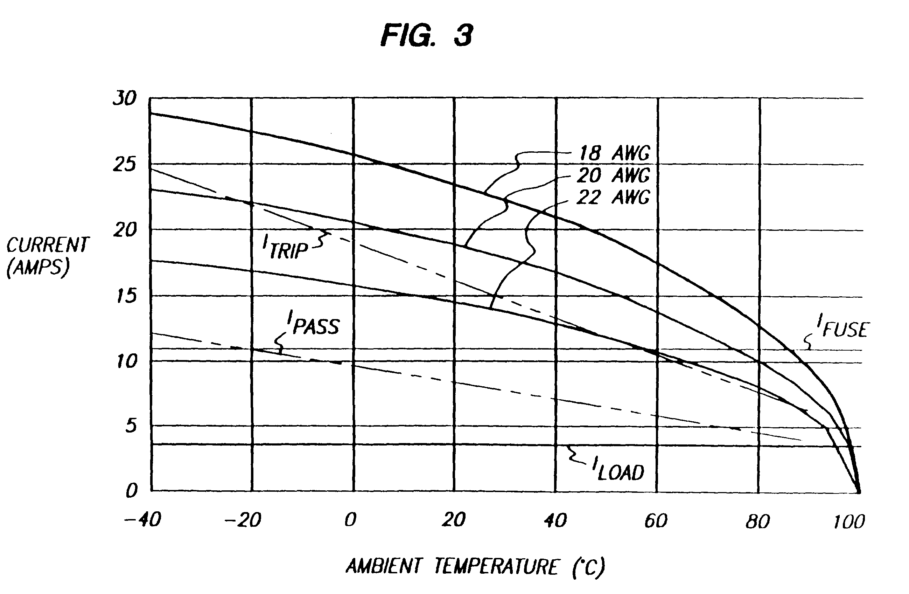

Figure 3 shows the relationship between ambient temperature and (a) the steady state load current, I_{LOAD}, in a typical branch circuit of about 4 amps (b) the pass current, I_{PASS}, and the trip current, I_{TRIP}, of a BPTC device, and (c) the damage current for typical PVC-insulated wires of 18 AWG, 20 AWG and 22 AWG. It will be seen that at all ambient temperatures between -40° and about 75°C, the BPTC device will not be tripped by I_{LOAD;} above about 75°C the device will be tripped by I_{LOAD,} even though the insulated wires will not be damaged by I_{LOAD} unless the ambient temperature is over 90°C. It will also be seen that at all ambient temperatures between -40° and about 90°C, the BPTC device will protect the 18 AWG wire (since it will be tripped by fault currents which would damage the 18 AWG wire). However, it protects the 20 AWG wire only between about -20° and about 90°C, and the 22 AWG wire only between about 50° and 85°C.

As is made clear by Figure 3, if the thermal derating curve had a lower slope, or if the spread between I_{PASS} and I_{TRIP} was lower, this would reduce the required wire size still further.

Also shown on Figure 3 is the current required to blow a fuse (I_{FUSE}) of the kind typically used in the prior art to protect a circuit having a steady state load current of about 4 amps but which is subject to much higher transient inrush currents. I_{FUSE} is for example about 12 amps because the fuse must accept those inrush currents. This in turn means that it is necessary to use 18 AWG wire if the ambient temperature may be greater than about 80°C.

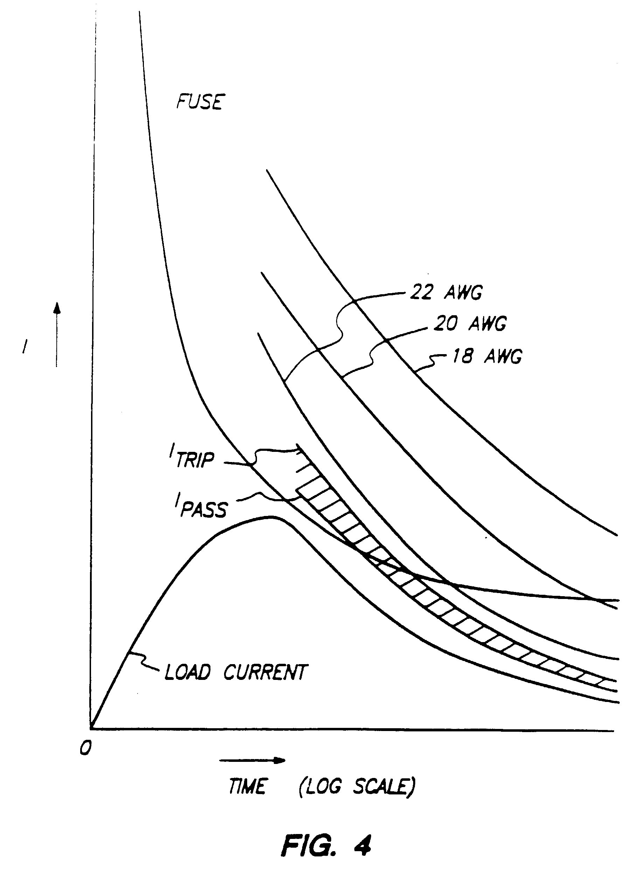

Figure 4 shows diagrammatically the way in which the relationship between time (on a log scale) and (a) the load current in a circuit containing a motor or lamp or other device drawing an inrush current, (b) the current which will blow a fuse of the kind used in the prior art in such a circuit (I_{FUSE(1)}), (c) the current which will blow a fuse having, under steady state conditions, a current-carrying capacity similar to a PTC device (I_{FUSE(2)}), (d) the transient currents need to damage insulated 18, 20 and 22 AWG wires, and (e) the transient currents which will always be passed by (I_{PASS}), and which will always cause tripping of (I_{TRIP}), the devices in a typical batch of a particular type of PTC device. It will be seen that the very rapid response of the fuses to transient currents means that a fuse which will pass normal transient inrush currents will also pass a relatively high steady state current (well above the steady state load current, as in Figure 3), and that this in turn means that the wiring in the circuit must be of 18 AWG size, or larger diameter. The PTC device, by contrast, reacts much more slowly than a fuse, and therefore permits the use of a wire of 20 AWG or even 22 AWG. A fuse having, under steady state conditions, a current-carrying capacity similar to the PTC device, will be blown by transient inrush currents which do not trip the PTC device.

## Claims

1. An electrical harness which is installed in, or which is suitable for installation in, an automobile, an airplane, or a ship, and which comprises
(1) supply connection means (7) which, when the harness is installed, is electrically connected to a first pole of a power source (1), and which has, at its weakest current-carrying point, a current-carrying capacity of I_{LINK}, and
(2) a plurality of PTC-protected branch circuits which are electrically connected to the supply means in parallel with each other, and each of which comprises
(a) a branch PTC circuit protection device (BPTC device) (201, 203-213) which is electrically connected to the supply connection means, and
(b) at least one elongate PTC-protected branch connection means which (i) has a first end which is connected to the BPTC device and a second end which, when the harness is installed, is connected to at least one operative device (101, 102, 104-125), and (ii) has, at its weakest current-carrying point, a current-carrying capacity of I_{DAMAGE}, I_{DAMAGE} being less than I_{LINK} at all temperatures between 0° and 80°C;
the BPTC device having, (i) a pass current (I_{PASS}) which is greater than the total steady state current (I_{LOAD}) which can be drawn by all the operative devices which, when the harness is installed, are electrically connected to the power supply through the BPTC device, and (ii) a trip current (I_{TRIP}) which, at all temperatures between 0° and 80°C, is less than I_{DAMAGE};
whereby, if one of the PTC-protected branch connection means is accidentally connected to the first and second poles of the power source by connections which do not include one of the operative devices, there is created a fault circuit which contains the BPTC circuit protection device;
wherein at least one of the following alternative conditions is fulfilled:
(A) in at least one of the PTC-protected branch circuits, I_{PASS} is at least 1.1 times I_{LOAD} at all temperatures between 0° and 80°C, and at at least one temperature between -40°C and 85°C, I_{PASS} is at most 1.3 times I_{LOAD};
(B) in at least one of the PTC-protected branch circuits, I_{DAMAGE} is at least 1.1 times I_{TRIP} at all temperatures between 0° and 80°C, and I_{DAMAGE} is at most 1.5 times I_{TRIP} at at least one temperature between -40° and 85°C ;
(C) the total number of PTC-protected branch circuits is ***p***, and at all temperatures between 0° and 80°C, in ***q*** of the PTC-protected branch circuits, where ***q*** is at least 0.1***p***, I_{DAMAGE} is equal to or lower than I₂₂, where I₂₂ is the I_{DAMAGE} of PVC-insulated copper wire having a cross-sectional area of 0.324 mm² (22 AWG); or
(D) some of the PTC-protected branch connection means are insulated copper wires having an I_{DAMAGE} equal to or less than I₂₂, and some of the PTC-protected branch connection means are insulated copper wires having an I_{DAMAGE} greater than I₂₂, where I₂₂ is the I_{DAMAGE} of a PVC-insulated copper wire having a cross-sectional area of 0.324 mm² (22 AWG), and at all temperatures between 0° and 80°C, the total length of the PTC-protected branch connection means having an I_{DAMAGE} greater than I₂₂ is not more than x times the total length of the PTC-protected branch connection means in which I_{DAMAGE} is equal to or less than I₂₂, where ***x*** is 10.

2. A harness according to Claim 1 wherein at least one of the following alternative conditions is fulfilled:
(1) in at least one of the PTC-protected branch circuits, I_{PASS} is at least 1.1 times I_{LOAD} at all temperatures between -40°C and 85°C, and at at least one temperature between -40°C and 85°C, I_{PASS} is at most 1.3 times I_{LOAD};
(2) in at least one of the PTC-protected branch circuits, I_{DAMAGE} is at least 1.1 times I_{TRIP} at all temperatures between -40°C and 85°C, and I_{TRIP} is at most 1.5 times I_{TRIP} at at least one temperature between -40°C and 85°C;
(3) the total number of PTC-protected branch circuits is *p*, and at all temperatures between -40°C and 85°C, in *q* of the PTC-protected branch circuits, where *q* is at least 0,1*p*, I_{DAMAGE} is equal to or lower than I₂₂, where I₂₂ is the I_{DAMAGE} of PVC-insulated copper wire having a cross-sectional area of 0.324 mm² (22 AWG); or
(4) some of the PTC-protected branch connection means are insulated copper wires having an I_{DAMAGE} equal to or less than I₂₂, and some of the PTC-protected branch connection means are insulated copper wires having an I_{DAMAGE} greater than I₂₂, where I₂₂ is the I_{DAMAGE} of a PVC-insulated copper wire having a cross-sectional area of 0.324 mm² (22 AWG), and at all temperatures between -40°C and 85°C, the total length of the PTC-protected branch connection means having an I_{DAMAGE} greater than I₂₂ is not more than x times the total length of the PTC-protected branch connection means in which I_{DAMAGE} is equal to or less than I₂₂, where *x* is 10.

3. A harness according to Claim 1 or 2 wherein
(1) the branch PTC device includes a PTC element composed of a PTC conductive polymer, and
(2) condition (A) is fulfilled and I_{PASS} is 1.1 to 1.3 times I_{LOAD} at all temperatures between 0° and 80°C.

4. A harness according to any one of the preceding claims wherein
(1) the branch PTC device includes a PTC element composed of a PTC conductive polymer, and
(2) condition (B) is fulfilled and I_{DAMAGE} is at most 1.3 times I_{TRIP} at all temperatures between 0° and 80°C.

5. A harness according to any one of the preceding claims wherein
(1) the branch PTC device includes a PTC element composed of a PTC conductive polymer, and
(2) condition (C) is fulfilled and *q* is greater than 0.3*p*.

6. A harness according to any one of the preceding claims wherein
(1) the branch PTC device includes a PTC element composed of a PTC conductive polymer, and
(2) condition (D) is fulfilled and *x* is 5.

7. A harness according to any one of claims 3 to 6 wherein the PTC element is sandwiched between two metal foil electrodes.

8. A harness according to Claim 1 or 2 wherein the branch PTC device includes a PTC element composed of a PTC conductive polymer.

9. A harness according to any one of the preceding claims wherein at least some of the PTC-protected branch connection means comprise insulated wires having a cross-sectional area of 0.324 mm² or less.

## Patentansprüche

1. Elektrischer Kabelbaum, der in einem Kraftfahrzeug, einem Flugzeug oder einem Schiff montiert ist oder zur Montage darin geeignet ist und der folgendes aufweist:
(1) eine Versorgungs-Verbindungseinrichtung (7), die bei montiertem Kabelbaum mit einem ersten Pol einer Energiequelle (1) verbunden ist und die an ihrem schwächsten Stromführungspunkt eine Strombelastbarkeit von I_{LINK} aufweist, und
(2) eine Vielzahl von PTC-geschützten Zweigschaltungen, die parallel zueinander mit der Versorgungseinrichtung elektrisch verbunden sind und von denen jede
(a) eine Zweig-PTC-Schaltungs-Schutzvorrichtung (BPTC-Vorrichtung) (201, 203 - 213), die mit der Versorgungs-Verbindungseinrichtung elektrisch verbunden ist, und
(b) wenigstens eine längliche PTC-geschützte Zweig-Verbindungseinrichtung aufweist, die (i) ein mit der BPTC-Vorrichtung verbundenes erstes Ende und ein zweites Ende besitzt, das bei montiertem Kabelbaum mit wenigstens einer Betriebsvorrichtung (101, 102, 104 - 125) verbunden ist, und die (ii) an ihrem schwächsten Stromführungspunkt eine Strombelastbarkeit von I_{DAMAGE} aufweist, wobei I_{DAMAGE} bei allen Temperaturen zwischen 0° und 80°C niedriger ist als I_{LINK};
wobei die BPTC-Vorrichtung (i) eine Stromdurchlässigkeit (I_{PAST}) besitzt, die größer ist als der gesamte Dauerstrom (I_{LOAD}), der von allen Beriebsvorrichtungen entnommen werden kann, die bei montiertem Kabelbaum durch die BPTC-Vorrichtung elektrisch mit der Stromversorgung verbunden sind, sowie (ii) einen Auslösestrom (I_{TRIP}) besitzt, der bei allen Temperaturen zwischen 0° und 80°C niedriger ist als I_{DAMAGE};
wobei dann, wenn eine der PTC-geschützten Zweig-Verbindungseinrichtungen unbeabsichtigterweise mit dem ersten und dem zweiten Pol der Energiequelle mit Verbindungen verbunden wird, die nicht eine der Betriebsvorrichtungen beinhalten, eine Fehlerschaltung erzeugt wird, die die BPTC-Schaltungs-Schutzvorrichtung beinhaltet;
wobei wenigstens eine der folgenden alternativen Bedingungen erfüllt ist:
(A) in wenigstens einer der PTC-geschützten Zweigschaltungen ist I_{PAST} wenigstens das 1,1-fache von I_{LOAD} bei allen Temperaturen zwischen 0° und 80°C, und bei wenigstens einer Temperatur zwischen - -40°C und 85°C ist I_{PAST} höchstens das 1,3-fache von I_{LOAD};
(B) in wenigstens einer der PTC-geschützten Zweigschaltungen ist I_{DAMAGE} wenigstens das 1,1-fache von I_{TRIP} bei allen Temperaturen zwischen 0° und 80°C, und I_{DAMAGE} ist höchstens das 1,5-fache von I_{TRIP} bei wenigstens einer Temperatur zwischen - 40° und 85°C;
(c) die Gesamtanzahl von PTC-geschützten Zweigschaltungen beträgt **p**, und bei allen Temperaturen zwischen 0° und 80°C ist in **q** der PTC-geschützten zweigschaltungen, wobei **q** wenigstens 0,1 **p** ist, I_{DAMAGE} gleich oder kleiner als I₂₂, wobei I₂₂ der Wert von I_{DAMAGE} des PVC-isolierten Kupferdrahts mit einer Querschnittsfläche von 0,324 mm² (22 AWG) ist; oder
(D) einige der PTC-geschützten Zweig-Verbindungseinrichten sind isolierte Kupferdrähte mit einem I_{DAMAGE} von gleich oder kleiner als I₂₂ und einige der PTC-geschützten Zweig-Verbindungseinrichten sind isolierte Kupferdrähte mit einem I_{DAMAGE} von größer als I₂₂, wobei I₂₂ der Wert von I_{DAMAGE} eines PVC-isolierten Kupferdrahts mit einer Querschnittsfläche von 0,324 mm² (22 AWG) ist, und bei allen Temperaturen zwischen 0° und 80°C ist die Gesamtlänge der PTC-geschützten Zweig-Verbindungseinrichtung mit einem I_{DAMAGE} von mehr als I₂₂ nicht mehr als das x-fache der Gesamtlänge der PTC-geschützten Zweig-Verbindungseinrichtung, bei der I_{DAMAGE} gleich oder kleiner als I₂₂ ist, wobei **x** gleich 10 ist.

2. Kabelbaum nach Anspruch 1,
wobei wenigstens eine der folgenden alternativen Bedingungen erfüllt ist:
(1) in wenigstens einer der PTC-geschützten Zweigschaltungen ist I_{PAST} wenigstens das 1,1-fache von I_{LOAD} bei allen Temperaturen zwischen - 40°C und 85°C, und bei wenigstens einer Temperatur zwischen - -40°C und 85°C ist I_{PAST} höchstens das 1,3-fache von I_{LOAD};
(2) in wenigstens einer der PTC-geschützten Zweigschaltungen ist I_{DAMAGE} wenigstens das 1,1-fache von I_{TRIP} bei allen Temperaturen zwischen - 40°C und 85°C, und I_{TRIP} ist höchstens das 1,5-fache von I_{TRIP} bei wenigstens einer Temperatur zwischen - 40° und 85°C;
(3) die Gesamtanzahl von PTC-geschützten Zweigschaltungen beträgt p, und bei allen Temperaturen zwischen 40° und 85°C ist in q der PTC-geschützten Zweigschaltungen, wobei q wenigstens 0,1 p ist, I_{DAMAGE} gleich oder kleiner als I₂₂, wobei I₂₂ der Wert von I_{DAMAGE} von PVC-isoliertem Kupferdraht mit einer Querschnittsfläche von 0,324 mm² (22 AWG) ist; oder
(4) einige der PTC-geschützten Zweig-Verbindungseinrichten sind isolierte Kupferdrähte mit einem I_{DAMAGE} von gleich oder kleiner als I₂₂, und einige der PTC-geschützten Zweig-Verbindungseinrichtungen sind isolierte Kupferdrähte mit einem I_{DAMAGE} von größer als I₂₂, wobei I₂₂ der Wert von I_{DAMAGE} eines PVC-isolierten Kupferdrahts mit einer Querschnittsfläche von 0,324 mm² (22 AWG) ist, und bei allen Temperaturen zwischen - 40°C und 85°C ist die Gesamtlänge der PTC-geschützten Zweig-Verbindungseinrichtung mit einem I_{DAMAGE} von mehr als I₂₂ nicht mehr als das x-fache der Gesamtlänge der PTC-geschützten Zweig-Verbindungseinrichtang, bei der I_{DAMAGE} gleich oder kleiner als I₂₂ ist, wobei x gleich 10 ist.

3. Kabelbaum nach Anspruch 1 oder 2,
wobei
(1) die Zweig-PTC-Vorrichtung ein PTC-Element aufweist, das aus einem leitfähigen PTC-Polymer gebildet ist, und
(2) die Bedingung (A) erfüllt ist und I_{PAST} das 1,1-bis 1,3-fache von I_{LOAD} bei allen Temperaturen zwischen 0° und 80°C beträgt.

4. Kabelbaum anch einem der vorausgehenden Ansprüche,
wobei
(1) die Zweig-PTC-Vorrichtung ein PTC-Element aufweist, das aus einem leitfähigen PTC-Polymer gebildet ist, und
(2) die Bedingung (B) erfüllt ist und I_{DAMAGE} höchstens das 1,3-fache von I_{TRIP} bei allen Temperaturen zwischen 0° und 80°C beträgt.

5. Kabelbaum nach einem der vorausgehenden Ansprüche,
wobei
(1) die Zweig-PTC-Vorrichtung ein PTC-Element aufweist, das aus einem leitfähigen PTC-Polymer gebildet ist, und
(2) die Bedingung (C) erfüllt ist und **q** größer als 0,3 **p** ist.

6. Kabelbaum nach einem der vorausgehenden Ansprüche,
wobei
(1) die Zweig-PTC-Vorrichtung ein PTC-Element aufweist, das aus einem leitfähigen PTC-Polymer gebildet ist, und
(2) die Bedingung (D) erfüllt ist und **x** gleich 5 ist.

7. Kabelbaum nach einem der Ansprüche 3 bis 6,
wobei das PTC-Element zwischen zwei MetallfolienElektroden angeordnet ist.

8. Kabelbaum nach Anspruch 1 oder 2,
wobei die Zweig-PTC-Vorrichtung ein PTC-Element aufweist, das aus einem leitfähigen PTC-Polymer gebildet ist.

9. Kabelbaum nach einem der vorausgehenden Ansprüche,
wobei wenigstens einige der PTC-geschützten Zweig-Verbindungseinrichtungen isolierte Drähte aufweisen, die eine Querschnittsfläche von 0,324 mm² oder weniger besitzen.

## Revendications

1. Faisceau électrique qui est installé dans, ou qui convient à une installation dans, une automobile, un aéronef ou un navire, et qui comporte
(1) un moyen (7) de connexion pour l'alimentation qui, lorsque le faisceau est installé, est connecté électriquement à un premier pôle d'une source d'énergie (1), et qui présente, à son point de passage de courant le moins intense, une intensité admissible (I_{LIAISON}), et
(2) plusieurs circuits de dérivation à protection PTC qui sont connectés électriquement au moyen d'alimentation en parallèle les uns avec les autres, et qui comprennent chacun,
(a) un dispositif de protection de circuit PTC de dérivation (dispositif BPTC) (201, 203-213) qui est connecté électriquement au moyen de connexion pour l'alimentation, et
(b) au moins un moyen allongé de connexion de dérivation à protection PTC qui (i) a une première extrémité qui est connectée au dispositif BPTC et une seconde extrémité qui, lorsque le faisceau est installé, est connectée à au moins un dispositif utilisateur (101, 102, 104-125), et (ii) a, au moins à son point de passage de courant de la plus faible intensité, une intensité admissible I_{DETERIORATION}, I_{DETERIORATION} étant inférieure à I_{LIAISON} à toutes températures entre 0 et 80°C ;
le dispositif BPTC ayant (i) une intensité de courant passante (I_{PASSANTE}) qui est supérieure à l'intensité totale du courant en régime stabilisé (I_{CHARGE}) qui peut être absorbée par tous les dispositifs utilisateurs qui, lorsque le faisceau est installé, sont connectés électriquement à l'alimentation en énergie par l'intermédiaire du dispositif BPTC, et (ii) une intensité de courant de déclenchement (I_{DECLENCHEMENT}) qui, à toutes températures entre 0 et 80°C, est inférieure à I_{DETERIORATION} ;
grâce à quoi, si l'un des moyens de connexion de dérivation à protection PTC est connecté accidentellement aux premier et second pôles de la source d'énergie par des connexions qui ne comprennent pas l'un des dispositifs utilisateurs, il est créé un circuit de défaut qui contient le dispositif de protection de circuit BPTC ;
dans lequel au moins l'une des conditions alternatives suivantes est remplie :
(A) dans au moins l'un des circuits de dérivation à protection PTC, I_{PASSANTE} est d'au moins 1,1 fois I_{CHARGE} à toutes températures entre 0° et 80°C, et à au moins une température entre -40°C et 85°C, I_{PASSANTE} est au maximum de 1,3 fois I_{CHARGE} ;
(B) dans au moins l'un des circuits de dérivation à protection PTC, I_{DETERIORATION} est d'au moins 1,1 fois I_{DECLENCHEMENT} à toutes températures entre 0° et 80°C, et I_{DETERIORATION} est au maximum de 1,5 fois I_{DECLENCHEMENT} à au moins une température entre -40° et 85°C ;
(C) le nombre total de circuits de dérivation à protection PTC est p, et à toutes températures entre 0° et 80°C, dans q des circuits de dérivation à protection PTC, où q est égal à au moins 0,1 p, I_{DETERIORATION} est égale ou inférieure à I₂₂, où I₂₂ est la valeur I_{DETERIORATION} d'un fil de cuivre isolé par PVC ayant une aire en section transversale de 0,324 mm² (calibre AWG 22) ; ou
(D) certains des moyens de connexion de dérivation à protection PTC sont des fils de cuivre isolés ayant une valeur I_{DETERIORATION} égale ou inférieure à I₂₂, et certains des moyens de connexion de dérivation à protection PTC sont des fils de cuivre isolés ayant une valeur I_{DETERIORATION} supérieure à I₂₂, où I₂₂ est la valeur I_{DETERIORATION} d'un fil de cuivre isolé par PVC ayant une aire en section transversale de 0,324 mm² (calibre AWG 22), et à toutes températures entre 0° et 80°C, la longueur totale des moyens de connexion de dérivation à protection PTC ayant une valeur I_{DETERIORATION} supérieure à I₂₂ n'est pas supérieure à x fois la longueur totale des moyens de connexion de dérivation à protection PTC dans lesquels I_{DETERIORATION} est égale ou inférieure à I₂₂, où x est égal à 10.

2. Faisceau selon la revendication 1, dans lequel au moins l'une des conditions alternatives suivantes est remplie :
(1) dans au moins l'un des circuits de dérivation à protection PTC, I_{PASSANTE} est d'au moins 1,1 fois I_{CHARGE} à toutes températures entre -40° et 85°C, et à au moins une température entre -40°C et 85°C, I_{PASSANTE} est au maximum de 1,3 fois I_{CHARGE} ;
(2) dans au moins l'un des circuits de dérivation à protection PTC, I_{DETERIORATION} est d'au moins 1,1 fois I_{DECLENCHEMENT} à toutes températures entre -40° et 85°C, et I_{DECLENCHEMENT} est au maximum de 1,5 fois I_{DECLENCHEMENT} à au moins une température entre -40° et 85°C ;
(3) le nombre total de circuits de dérivation à protection PTC est p, et à toutes températures entre 40° et 85°C, dans q des circuits de dérivation à protection PTC, où q est égal à au moins 0,1 p, I_{DETERIORATION} est égale ou inférieure à I₂₂, où I₂₂ est la valeur I_{DETERIORATION} d'un fil de cuivre isolé par PVC ayant une aire en section transversale de 0,324 mm² (calibre AWG 22) ; ou
(4) certains des moyens de connexion de dérivation à protection PTC sont des fils de cuivre isolés ayant une valeur I_{DETERIORATION} égale ou inférieure à I₂₂, et certains des moyens de connexion de dérivation à protection PTC sont des fils de cuivre isolés ayant une valeur I_{DETERIORATION} supérieure à I₂₂, où I₂₂ est la valeur I_{DETERIORATION} d'un fil de cuivre isolé par PVC ayant une aire en section transversale de 0,324 mm² (calibre AWG 22), et à toutes températures entre -40° et 85°C, la longueur totale des moyens de connexion de dérivation à protection PTC ayant une valeur I_{DETERIORATION} supérieure à I₂₂ n'est pas supérieure à x fois la longueur totale des moyens de connexion de dérivation à protection PTC dans lesquels I_{DETERIORATION} est égale ou inférieure à I₂₂, où x est égal à 10.

3. Faisceau selon la revendication 1 ou 2, dans lequel
(1) le dispositif PTC de dérivation comprend un élément PTC composé d'un polymère conducteur PTC, et
(2) la condition (A) est remplie et I_{PASSANTE} est de 1,1 à 1,3 fois I_{CHARGE} à toutes températures entre 0° et 80°C.

4. Faisceau selon l'une quelconque des revendications précédentes, dans lequel
(1) le dispositif PTC de dérivation comprend un élément PTC composé d'un polymère conducteur PTC, et
(2) la condition (B) est remplie et I_{DETERIORATION} est au maximum de 1,3 fois I_{DECLENCHEMENT} à toutes températures entre 0° et 80°C.

5. Faisceau selon l'une quelconque des revendications précédentes, dans lequel
(1) le dispositif PTC de dérivation comprend un élément PTC composé d'un polymère conducteur PTC, et
(2) la condition (C) est remplie et g est supérieur à 0,3 p.

6. Faisceau selon l'une quelconque des revendications précédentes, dans lequel
(1) le dispositif PTC de dérivation comprend un élément PTC composé d'un polymère conducteur PTC, et
(2) la condition (D) est remplie et x est égal à 5.

7. Faisceau selon l'une quelconque des revendications 3 à 6, dans lequel l'élément PTC est intercalé entre deux électrodes en feuille métallique mince.

8. Faisceau selon la revendication 1 ou 2, dans lequel le dispositif PTC de dérivation comprend un élément PTC composé d'un polymère conducteur PTC.

9. Faisceau selon l'une quelconque des revendications précédentes, dans lequel au moins certains des moyens de connexion de dérivation à protection PTC comprennent des fils isolés ayant une aire en section transversale de 0,324 mm² ou moins.
